# EUROPÄISCHE PATENTSCHRIFT

(11) **EP 2 239 181 B1**
(45) Veröffentlichungstag und Bekanntmachung des Hinweises auf die Patenterteilung: **26.08.2015**
(21) Anmeldenummer: 10003404.0
(22) Anmeldetag: 30.03.2010
(51) Int. Cl.: B62D 11/00, B62D 11/18

(54) **Einrichtung zur Steuerung einer Lenkung insbesondere eines Ketten- bzw. Gleiskettenfahrzeuges**
Device for controlling the steering of a track or crawler vehicle in particular
Dispositif de commande d'une direction, notamment d'un véhicule à chenilles ou d'une autochenille

(30) Priorität: 06.04.2009 DE 102009016323
(43) Veröffentlichungstag der Anmeldung: 13.10.2010
(73) Patentinhaber: Rheinmetall Landsysteme GmbH, 29345 Unterlüß (DE)
(72) Erfinder: Bruhn, Ralf, 24259 Westensee (DE); Lüers, Broder, 24796 Bredenbek (DE); Lumkowsky, Frank, 24229 Dänischenhagen (DE)
(74) Vertreter: Dietrich, Barbara

(56) Entgegenhaltungen:
- DE-A1- 3 819 446
- DE-A1- 19 614 723

## Beschreibung

Die Erfindung beschäftigt sich mit der Einrichtung zum Steuern einer Lenkung eines Gleisketten- bzw. Kettenfahrzeuges, insbesondere die Umschaltung einer Lenkung für das Vorwärts- oder Rückwärtsfahren des Kettenfahrzeuges.

Das Lenken von Ketten- bzw. Gleiskettenfahrzeugen erfolgt durch ein hydrodynamisches Lenkgetriebe, das als Teil des Fahrzeugantriebs ausgebildet ist. Durch dieses Lenkgetriebe werden die Antriebsräder der (Gleis)- Ketten jeder Fahrzeugseite entsprechend der auszuführenden Kurvenbewegung des Fahrzeugs bei Vorwärts- und Rückwärtsfahrt angetrieben. Das Lenkgetriebe wird vom Lenkrad aus über eine Welle und ein Betätigungsgestänge, das auf Steuerventile des Getriebes einwirkt, betätigt.

Bei Kettenfahrzeugen ist bekanntlich eine Lenksinnumkehr erforderlich, damit beim Vorwärts- und beim Rückwärtsfahren mit Einschlagen des Lenkrades beispielsweise nach rechts das Fahrzeug bei Fahrt eine Kurve nach rechts bzw. mit Einschlagen nach links eine Kurve nach links fährt. Ohne die Einrichtung zur Lenksinnumkehr würde bei einer Rückwärtsfahrt, wenn das Lenkrad nach rechts gedreht wird, das Fahrzeug eine Kurve nach rückwärts links fahren und umgekehrt. Eine ungleichsinnige Lenkradbewegung kann leicht zu einer Fehlbedienung und damit zu Unfällen führen.

Eine Fahr- und Lenkbetätigungseinrichtung eines hydrostatischen Antriebs für ein Gleiskettenfahrzeug beschreibt die DE 15 05 677 C3. Durch die Einbindung eines Zapfens und weiterer Verbindungen wird erreicht, dass die Einrichtung verhältnismäßig wenige Teile benötigt und dadurch unkomplizierter und billiger wird.

Mit der DE 17 80 106 C3 wird eine Einstellvorrichtung für den Förderstrom einer Pumpe des hydrostatischen Lenkgetriebeteils eines Überlagerungslenkgetriebes für Gleiskettenfahrzeuge offenbart. Diese Einstellvorrichtung bewirkt, dass bei Umkehr der Fahrtrichtung und gleichbleibender Stellung de Lenkhebels das Fahrzeug um den gleichen Kurvenmittelpunkt aber in umgekehrten Drehsinn schwenkt.

Eine weitere Vorrichtung zum Steuern einer Lenkung für Gleiskettenfahrzeuge kann der DE 29 48 214 A1 entnommen werden. Diese umfasst ein Umschaltelement, das drehbar mit der Lenksäule verbunden ist.

Eine Vorrichtung zur Umschaltung von Lenkgetrieben bei Kettenfahrzeugen betrifft gemäß dem Oberbegriff des Anspruchs 1 auch die DE 38 19 446 C2. Hierbei ist eine Lenkradwelle über wenigstens ein Zahnrad mit einem wenigstens eine Verzahnung aufweisenden Steuerorgan für das Lenkgetriebe verbunden, sodass die Lenkumschaltung ohne große Schwenkräume ausgebildet werden kann.

Die DE 42 10 728 A1 schlägt ihrerseits eine Vorrichtung zur Steuerung einer Lenkung für Gleiskettenfahrzeuge vor, die einen Umlenkhebel umfasst, der mit dem Lenkrad drehbar verbunden ist. Der Umlenkhebel wird dabei mit einer im Abstand zur Schwenkachse gehaltenen Druckfeder in den zwei Stellungen arretiert.

Eine Vorrichtung zur Lenksinnumkehr bei Kettenfahrzeugen ist zudem in der DE 196 06 793 C1 dokumentiert. Dabei ist der Lenkungszug direkt an einem axial verschiebbaren Schlitten befestigt, sodass auf einen Umlenkhebel verzichtet werden kann, da der Schlitten von einem doppelt wirkenden Zylinder je nach Fahrtrichtungswahl in eine der beiden Endpositionen verschoben wird.

Eine mechanische Vorrichtung zur Lenksinnumschaltung wird des Weiteren mit der DE 196 14 723 A1 publiziert. Diese Vorrichtung zeichnet sich dadurch aus, dass die Lenkgeometrie nach Umschaltung mittels eines Stellzylinders in zwei Betriebsstellungen von Gasfedern hoher Kraftwirkung in den Endlagen festgehalten wird.

Die DE 10 2005 030 495 A1 schlägt ihrerseits vor, eine Lenksinnumschalteinrichtung zwischen einer Lenkung und einem Lenkgetriebe einzubinden und die wesentlichen Teile dieser Einrichtung von der Lenkbewegung selbst vollständig zu entkoppeln. Dadurch sind keine Komponenten an der Lenkwelle adaptiert, die bei einem Lenkausschlag mitbewegt werden müssten. Diese Lenksinnumschaltung zeichnet sich dadurch aus, dass sie eine Kulisse mit einer Führung und einem Rastmechanismus umfasst, wobei die Führung fest mit einer Lenkwelle des Lenkrades verbunden ist. Die Kulisse wirkt dabei mit einem oberen und einem unteren Schaltlager einer Schaltklaue zusammen, wobei die Schaltklaue um einen Schaltklauendrehpunkt verdrehbar ist. Mit dieser Einrichtung werden die gültigen Standards besser erfüllt.

Die Erfindung stellt sich die Aufgabe, eine weitere Lenksinnumschaltung insbesondere für eine Winkelumlenkung vorzuschlagen, die die gültigen Sicherheitsstandards erfüllt und einen konstruktiv einfachen Aufbau besitzt.

Gelöst wird die Aufgabe durch die Merkmale des Patentanspruchs 1. Vorteilhafte Ausführungen sind den Unteransprüchen entnehmbar.

Der Erfindung liegt die Idee zugrunde, da die Lenkbewegung als Winkelausschlag in eine lineare Bewegung umgewandelt werden muss, ein so genanntes "Schalten eines Anlenkhebels" in die mechanische Übertragungskette vom Lenkrad zum Fahrzeuggetriebe an eine geeignete Stelle einzubinden. Bevorzugt hat sich die Einbindung an einer Winkelumlenkung des Lenkgestänges gezeigt.

Die für den Lenkbetrieb sicherheitsrelevanten Endlagenfixierungen der umschaltbaren Übertragungselemente werden dabei in der Art gesichert, dass keine durch die Lenkbewegung hervorgerufenen Kräfte direkt auf den bzw. die Stellglieder (z. B. Hydraulikzylinder, Federelemente) wirken oder aber diese selbst nicht stetig aktiv oder angesteuert werden müssen, sodass bei einem Ausfall der Schaltglieder außerhalb des Schaltvorganges selbst dies für die eigene Lenkbewegung sicherheitsunkritisch ist. Zudem sind die Komponenten, die für die Umschaltung sorgen, auch hier von der Lenkbewegung vollständig entkoppelt, d. h. auch, dass keine Komponenten an der Lenkwelle adaptiert sind, welche beim Lenkausschlag mitbewegt werden müssten.

Anhand eines Ausführungsbeispiels mit Zeichnung soll die Erfindung näher erläutert werden.

Es zeigt:
- Fig. 1: eine perspektivische Darstellung einer kompletten Lenksinnumschaltung,
- Fig. 2: die Lenksinnumschaltung aus Fig. 1 in einer anderen Perspektive,

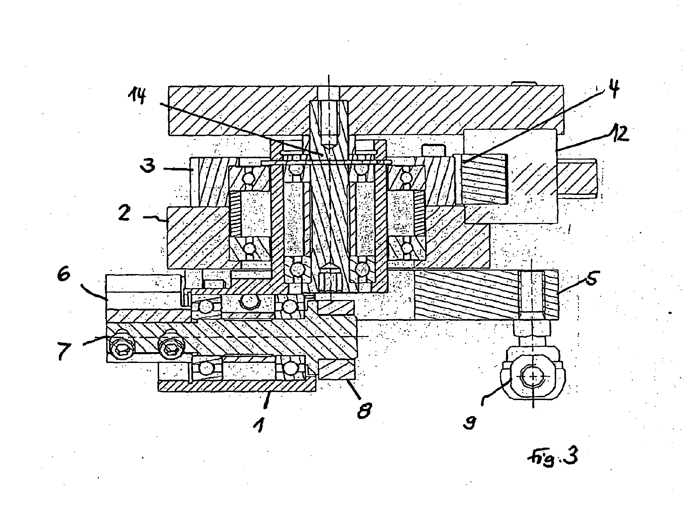

- Fig. 3: einen Schnitt durch die Hauptdrehachse,
- Fig. 4: einen Lenkausschlag links,
- Fig. 5: einen Lenkausschlag rechts,
- Fig. 6a -g: einen Bewegungsablauf des Umschaltvorganges,
- Fig. 7a, b: die beiden Endstellungen des Umschaltvorganges.

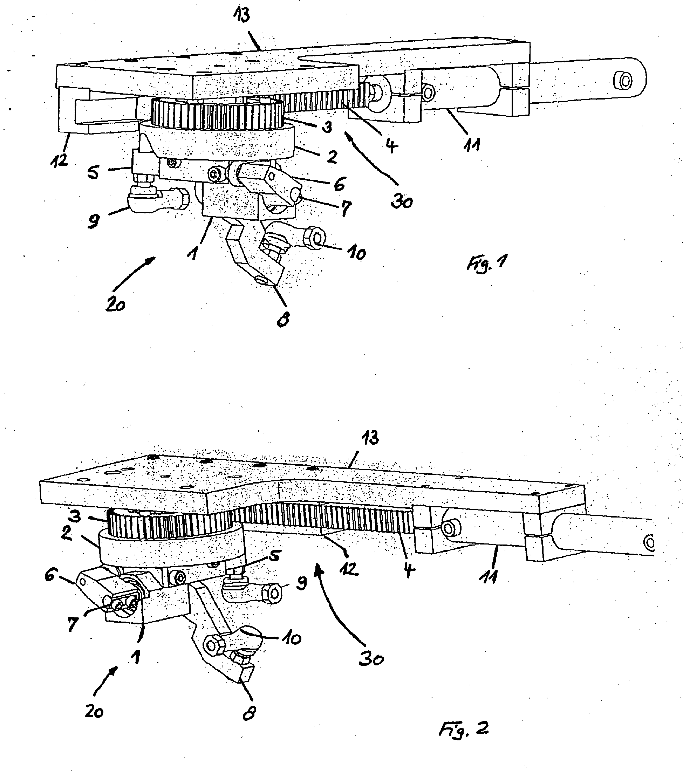

In den Fig. 1 und 2 sind mit 20 Teile einer Lenksinnumschaltung (LSU) gekennzeichnet, die in den mechanischen Übertragungsweg zwischen einem Lenkrad und einem Fahrzeuggetriebe eingebunden ist, im vorliegenden Beispiel in einer Winkelumlenkung der vorhandenen Koppelstangen eines Gleiskettenfahrzeugs (Baugruppen nicht näher dargestellt, da dem Fachmann bekannt).

Die Winkelumlenkung 30 besteht im Wesentlichen aus einem Schwenk- bzw. Steuergehäuse 1, einem Ritzel 3, einer Zahnstange 4 sowie einem ersten Anlenkhebel 5 und einem zweiten Anlenkhebel 8. Der Anlenkhebel 5 und das Steuergehäuse 1 sind starr miteinander verbunden. Im Anlenkhebel 5 ist ein zugehöriger Kugelkopf 9 eingebunden, beispielsweise eingeschraubt, während ein weiterer Kugelkopf 10 mit dem Anlenkhebel 8 verbunden ist. Die nicht näher dargestellten Koppelstangen enden in Koppelköpfen 9, 10. Mit 11 ist ein Schaltglied (z. B. Hydraulikzylinder) des Fahrzeugs gekennzeichnet, mit 12 eine weitere Zahnstangenführung. Die Zahnstange 4 als Kopplung zwischen Schaltkulisse 2 und Schaltglied 11 ist in den Endlagen mechanisch rastend ausgeführt und in den Endlagen sensierbar.

Die vorgenannten Teile werden vorzugsweise von einer gemeinsamen Grundplatte 13 getragen, die ortsfest mit dem Fahrzeugchassis verbunden ist.

Die Umsetzung der Winkelbewegung des Lenkrades in eine Linearbewegung für das Schaltglied 11 erfolgt über die Drehachse 14 der LSU 20.

Die LSU 20 besteht aus einer Schaltkulisse 2, die mit dem Ritzel 3 fest verbunden ist, einem Steuerhebel 6 und einer Schwenkwelle 7, die ebenfalls von der Grundplatte getragen werden. Der Steuerhebel 6 ist über die Schwenkwelle 7 fest mit dem Anlenkhebel 8 verbunden und steuert dessen Position abhängig von der Vorwärts- oder Rückwärtsfahrt.

### Die Funktionsweise für das Lenken ist wie folgt:

Die nicht näher dargestellten Koppelstangen übertragen den Winkelausschlag des Lenkrades als lineare Bewegung und enden in den Koppelköpfen 9, 10 der LSU 20. Erfolgt eine lineare Bewegung der Koppelstangen, so schwenkt der Unterbau (1, 5, 6, 7, 8, 9, 10) um die Drehachse 14.

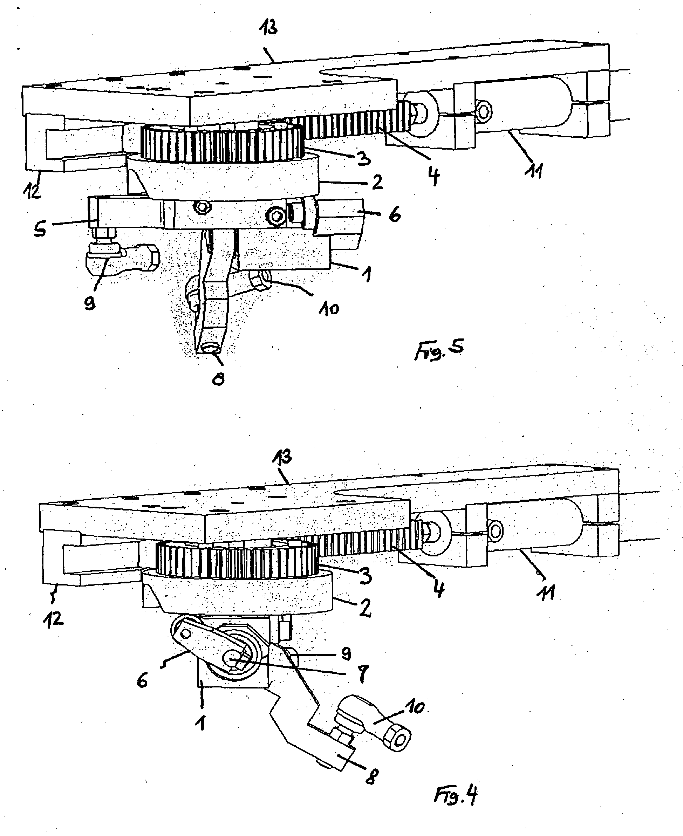

Fig. 4 zeigt die LSU 20 in vollem Lenkausschlag "Links" und Fig. 5 in vollem Lenkausschlag "Rechts" bei der Schaltstellung "Vorwärts".

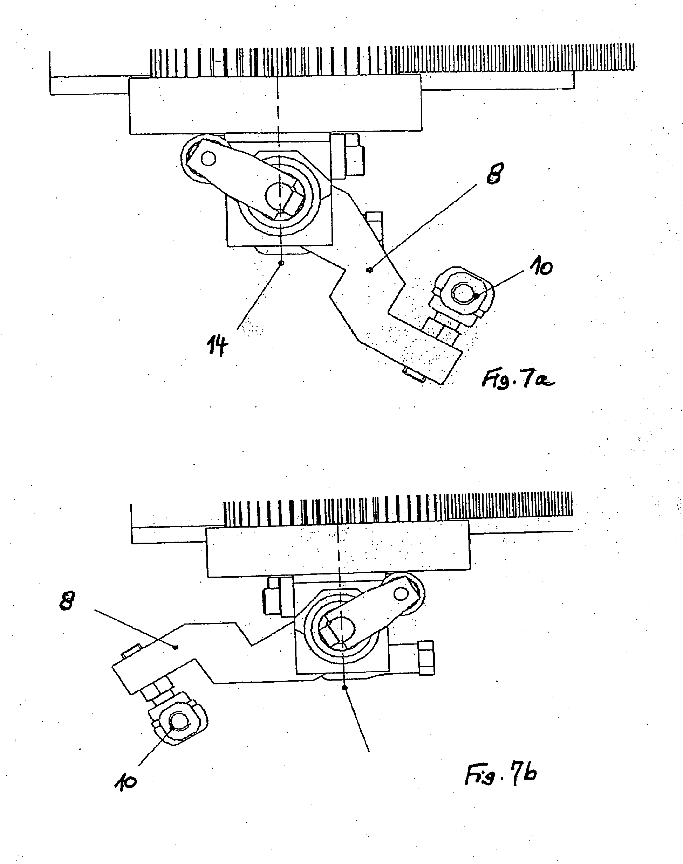

Für das Umschalten des Lenksinns für das "Rückwärtsfahren" muss der Anlenkhebel 8 mit dem adaptierten Kugelkopf 10 auf die gegenüberliegende Seite der Drehachse 14 geschwenkt werden, sodass die lineare Bewegung der Koppelstangen invers (umgekehrt) ausgeführt wird (Fig. 7a, b).

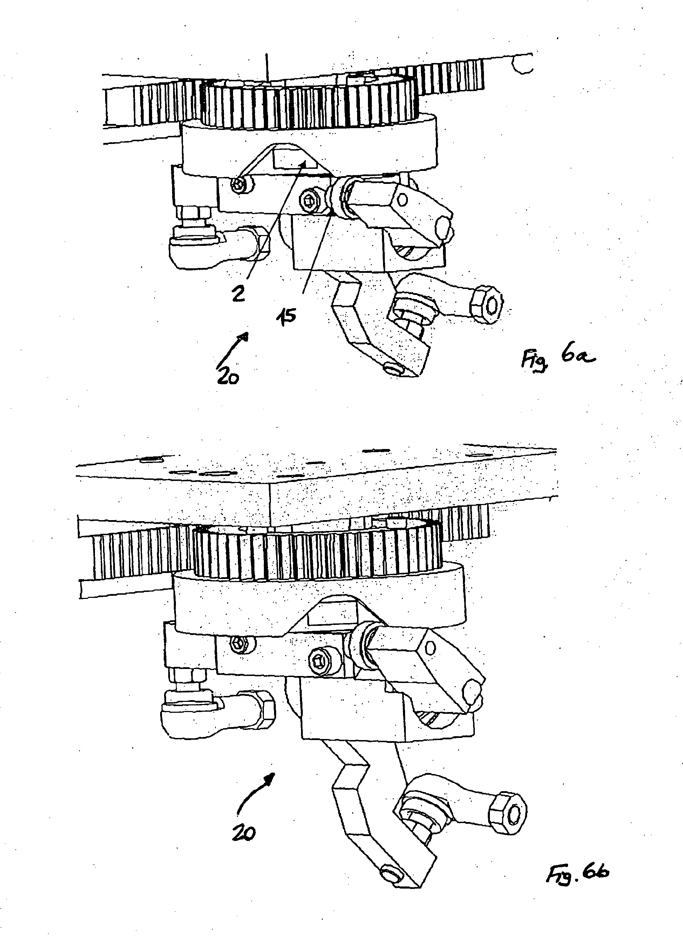

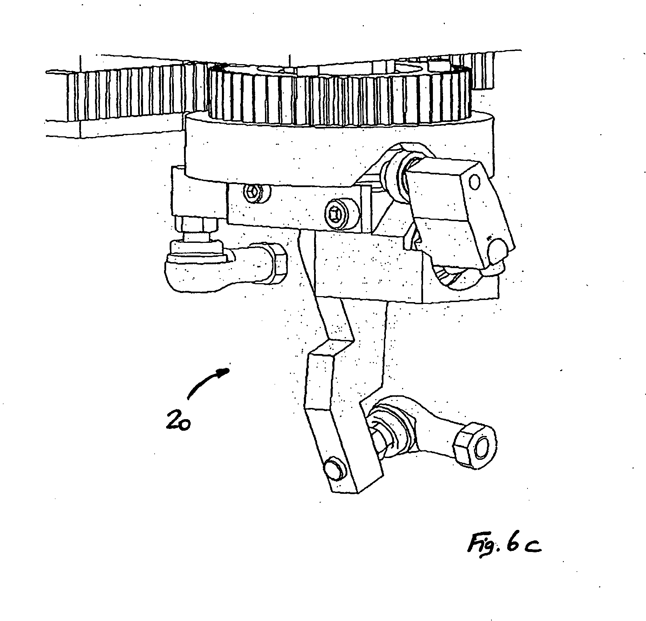

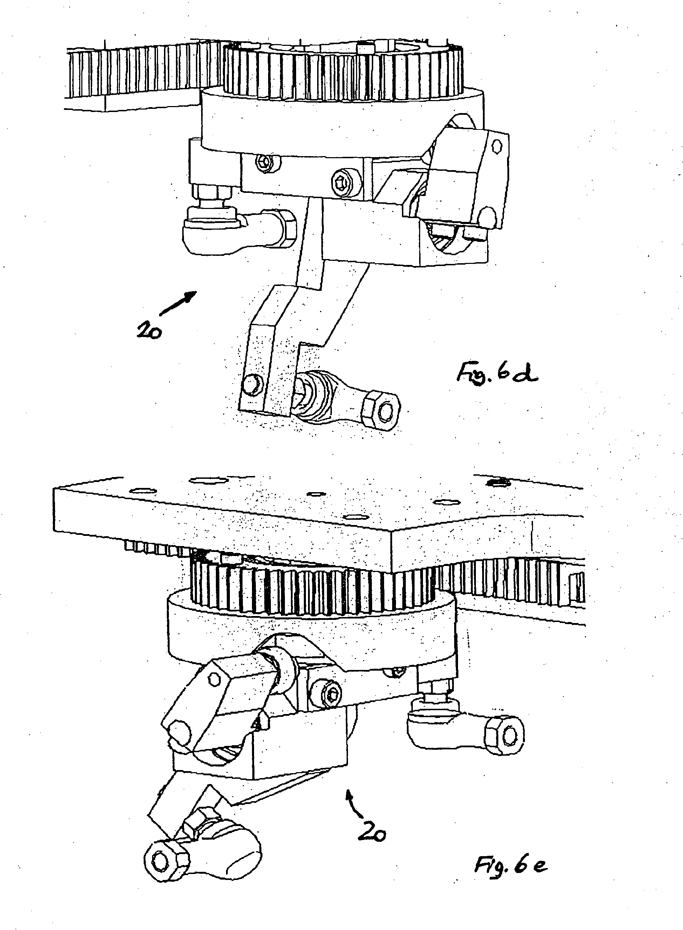

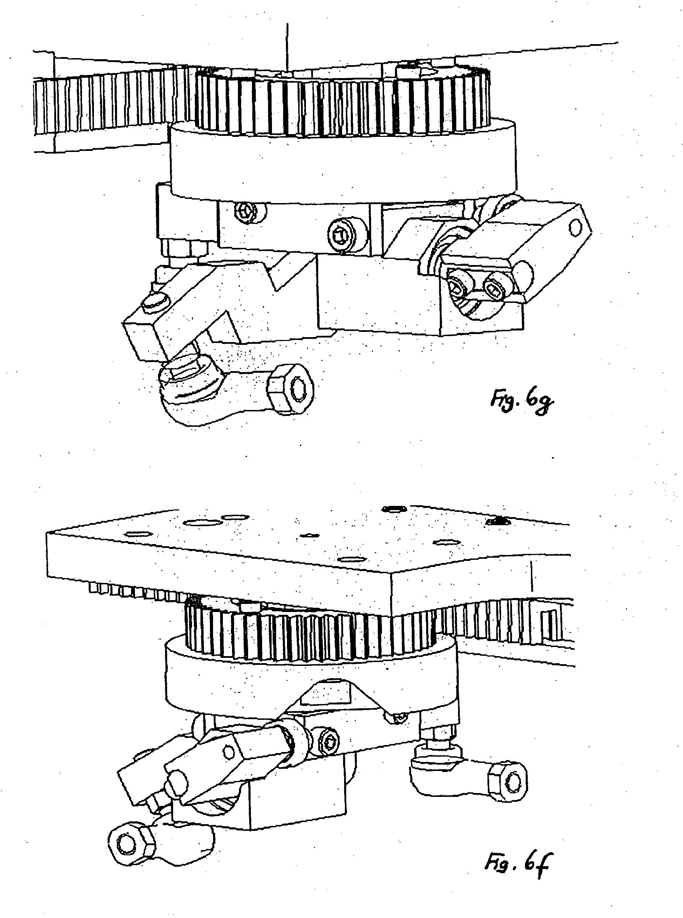

Dafür wird das Schaltglied 11 umgesteuert, welches über die Zahnstangen-Ritzel Anordnung 3, 4 die Schaltkulisse 2 dreht. Die Steuerkurve der Schaltkulisse 2 erfasst die am Steuerhebel 6 adaptierte Laufrolle 15 und schwenkt den Anlenkhebel 8 um den entsprechenden Winkel in die entgegengesetzte Richtung bis dieser den Formschluss an der Unterseite der Schaltkulisse 2 erreicht (Fig. 6 a-g).

Für das Umschalten des Lenksinns für das "Vorwärtsfahren" sind die Abläufe aus den Fig. 6 a-g in umgekehrter Reihenfolge zu sehen.

Ein Ausfall der Hydraulik und / oder der elektrischen Ansteuerung ist für die Umschaltmechanik sicherheitsunkritisch, da diese in der angewählten Schaltstellung verharrt. Soll beispielsweise bei einem der vorgenannten Ausfällen umgeschaltet werden, kann die Zahnstange 4 mittels eines mechanischen Kupplungsgliedes vom Schaltglied 11 entkoppelt und das Ganze manuell umgeschaltet werden (nicht näher dargestellt).

## Patentansprüche

1. Einrichtung zur Steuerung einer Lenkung eines Ketten- bzw. Gleiskettenfahrzeuges, wobei eine Lenksinn-Umschaltung (20) zwischen einem Lenkrad zur Steuerung des Fahrzeugs und einem Fahrzeuggetriebe, in einer Winkelumlenkung (30), bestehend im Wesentlichen aus einem Schwenk- bzw. Steuergehäuse (1), einem Ritzel (3), einer Zahnstange (4) sowie einem ersten Anlenkhebel (5) und einem zweiten Anlenkhebel (8), eingebunden ist, **dadurch gekennzeichnet, dass** die Lenksinn-Umschalteinrichtung (20) im Wesentlichen besteht aus einer Schaltkulisse (2), einem Steuerhebel (6) sowie einer Schwenkwelle (7), wobei der Steuerhebel (6) über die Schwenkwelle (7) fest mit dem Anlenkhebel (8) verbunden ist und dessen Position abhängig von der Vorwärts- oder Rückwärtsfahrt steuert.

2. Einrichtung nach Anspruch 1, **dadurch gekennzeichnet, dass** der Anlenkhebel (5) und das Steuergehäuse (1) und die Schaltkulisse (2) mit dem Ritzel (3) starr miteinander verbunden sind, im Anlenkhebel (5) ein zugehöriger Kugelkopf (9) eingebunden während ein weiterer Kugelkopf (10) mit dem Anlenkhebel (8) verbunden ist und die Zahnstange (4) als Kopplung zwischen Schaltkulisse (2) und Schaltglied (11) dient.

3. Einrichtung nach Anspruch 1 oder 2, **dadurch gekennzeichnet, dass** Teile des Fahrzeuggetriebes und die Lenksinn- Umschaltung (20) von einer Grundplatte (13) getragen ortsfest mit dem Fahrzeugchassis verbunden ist.

4. Einrichtung nach einem der Ansprüche 1 bis 3, **dadurch gekennzeichnet, dass** das Schaltglied (11) ein Hydraulikzylinder ist.

## Claims

1. Device for controlling the steering of a track or crawler vehicle, wherein a steering-direction-switching means (20) is integrated between a steering wheel for controlling the vehicle and a vehicle transmission, in an angle-deflection means, (30) composed essentially of a pivoting housing or steering housing (1), a pinion (3), a steering rack (4) and a first coupling lever (5) and a second coupling lever (8), **characterized in that** the steering-direction-switching device (20) is composed essentially of a shifting gate (2), a control lever (6) and a pivoting shaft (7), wherein the control lever (6) is fixedly connected to the coupling lever (8) via the pivoting shaft (7), and controls the position of said coupling lever (8) as a function of the forward travel or reverse travel.

2. Device according to Claim 1, **characterized in that** the coupling lever (5) and the steering housing (1) and the shifting gate (2) are rigidly connected to one another with the pinion (3), an associated spherical head (9) is integrated into the coupling lever (5), while a further spherical head (10) is connected to the coupling lever (8), and the steering rack (4) serves as a coupling between the shifting gate (2) and the shifting element (11).

3. Device according to Claim 1 or 2, **characterized in that** parts of the vehicle transmission and the steering-direction-switching means (20) are connected to the vehicle chassis while being supported in a position in a fixed fashion by a base plate (13).

4. Device according to one of Claims 1 to 3, **characterized in that** the shifting element (11) is a hydraulic cylinder.

## Revendications

1. Dispositif de commande d'une direction d'un véhicule à chenilles ou d'une autochenille, un dispositif de commutation du sens de direction (20) étant incorporé entre un volant de direction pour la commande du véhicule et une boîte de vitesses du véhicule dans un renvoi d'angle (30), constitué essentiellement d'un boîtier pivotant ou de commande (1), d'un pignon (3), d'une crémaillère (4) ainsi que d'un premier levier d'articulation (5) et d'un deuxième levier d'articulation (8), **caractérisé en ce que** le dispositif de commutation du sens de direction (20) se compose essentiellement d'une coulisse de commutation (2), d'un levier de commande (6) ainsi que d'un arbre pivotant (7), le levier de commande (6) étant connecté fixement au levier d'articulation (8) par le biais de l'arbre pivotant (7) et commandant sa position en fonction de la conduite en marche avant ou en marche arrière.

2. Dispositif selon la revendication 1, **caractérisé en ce que** le levier d'articulation (5) et le boîtier de commande (1) et la coulisse de commutation (2) avec le pignon (3) sont connectés rigidement les uns aux autres, une tête sphérique associée (9) est incorporée dans le levier d'articulation (5) tandis qu'une tête sphérique supplémentaire (10) est connectée au levier d'articulation (8), et la crémaillère (4) sert d'accouplement entre la coulisse de commutation (2) et un organe de commutation (11).

3. Dispositif selon la revendication 1 ou 2, **caractérisé en ce que** des parties de la boîte de vitesses du véhicule et le dispositif de commutation du sens de direction (20) sont connectés au châssis du véhicule de manière fixe et supportée par une plaque de base (13).

4. Dispositif selon l'une quelconque des revendications 1 à 3, **caractérisé en ce que** l'organe de commutation (11) est un cylindre hydraulique.
